# EUROPEAN PATENT SPECIFICATION

(11) **EP 0 369 403 B1**
(45) Date of publication and mention of the grant of the patent: **08.02.1995**
(21) Application number: 89121074.2
(22) Date of filing: 14.11.1989
(51) Int. Cl.: H04M 1/02, H04M 11/02, H05K 5/00

(54) **Button panel with composable modular elements, particularly for house-phone and house-videophone systems**
Bedienungspult mit in Modulbauweise zusammensetzbaren Elementen, insbesondere für Tür- und Hausvideofernsprechstellen-Systeme
Panneau de commande à éléments modulaires emboîtables en particulier pour des systèmes d'interphone et de vidéophone domestiques

(30) Priority: 18.11.1988 IT 6802888
(43) Date of publication of application: 23.05.1990
(73) Proprietor: URMET S.p.A. Costruzioni Elettro-Telefoniche, I-10154 Torino (IT)
(72) Inventor: Mondardini, Massimo, I-10123 Torino (IT)
(74) Representative: Modiano, Guido, Dr.-Ing.

(56) References cited:
- EP-A- 0 351 060
- DE-C- 3 214 435
- FR-A- 2 248 563
- GB-A- 2 149 221

## Description

The present invention relates to a button panel with composable modular elements particularly for outdoor posts, exchanges or the like, of house-phone or house-videophone systems.

Current button panels for outdoor posts are constituted by a box which can be mounted flush to the wall or not and is closed by a front plate the dimensions whereof, correlated to those of the box, are determined by the number of buttons and therefore of house-phones which compose the system.

This known structure has considerable disadvantages, and mainly those deriving from the "rigidity" of the structure itself, which does not allow to vary the number of installed devices, thus forcing to manufacture and store various elements of the button panel which differ in dimensions and/or structure.

A modular pushbutton board comprising a supporting body for housing modules is known from GB-A-2,149,221. The body is provided with openings which are cut to the necessary length according to the specific application, i.e. according to the size of the specific module used. However, as it is the case with the foregoing known devices, the board of GB-A-2,149,221 does not allow to vary the number of installed modules.

To obviate this considerable disadvantage, button panels with a composable structure have been proposed and manufactured in which modular box-like elements, which contain the electric components and have a preset number of buttons associated with name-holder cards, are mounted on retention plates in which the accommodations intended to receive said modular elements are already formed.

Button panels of this more recent kind solve the problem of modularity only partially, since the accommodations formed in the plate require plates of different dimensions which must be differently preset depending on the number of modular elements which will compose the button panel.

The structure of such button panels is furthermore still considerably complicated and thus requires to manufacture and store a considerable number of parts, with a consequent increase in manufacturing and storage costs.

The aim of the present invention is to eliminate these disadvantages by providing a composable button panel provided by a set of elements which are all strictly modular, can be assembled in a simple and rapid manner and are adapted to compose a sturdy structure which simplifies and facilitates installation operations and interventions for maintenance and for part replacement, and has at the same time a pleasant aesthetic appearance.

According to the present invention, this aim and other important objects which will become apparent from the following detailed description are achieved by the button panel as defined in claim 1.

The characteristics and advantages will become apparent from the following detailed description and with reference to the accompanying drawings, given by way of non-limitative example, wherein:
figure 1 is an exploded perspective view of the button panel;
figure 2 is an enlarged-scale view of a detail of figure 1;
figure 3 is an exploded perspective view of a modular element which composes the button panel;
figure 4 is an enlarged-scale sectional view taken along the line IV-IV of figure 3.

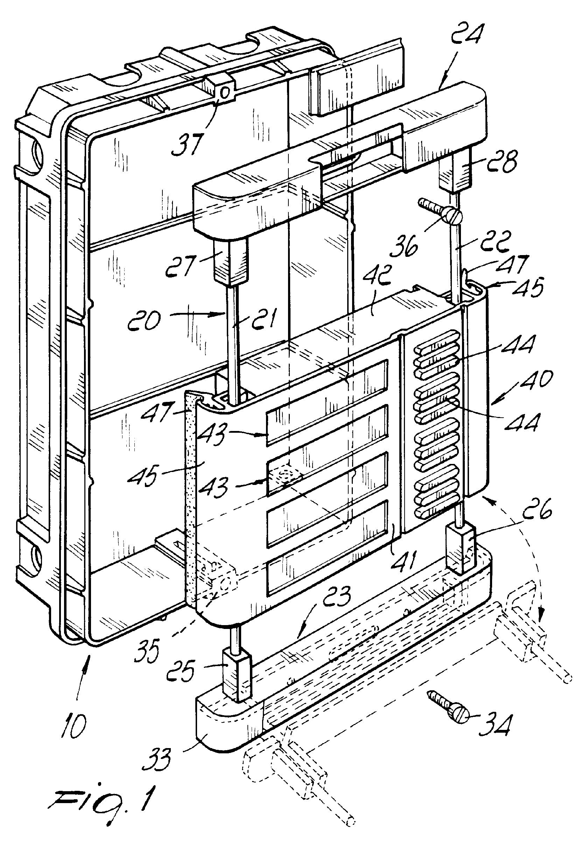

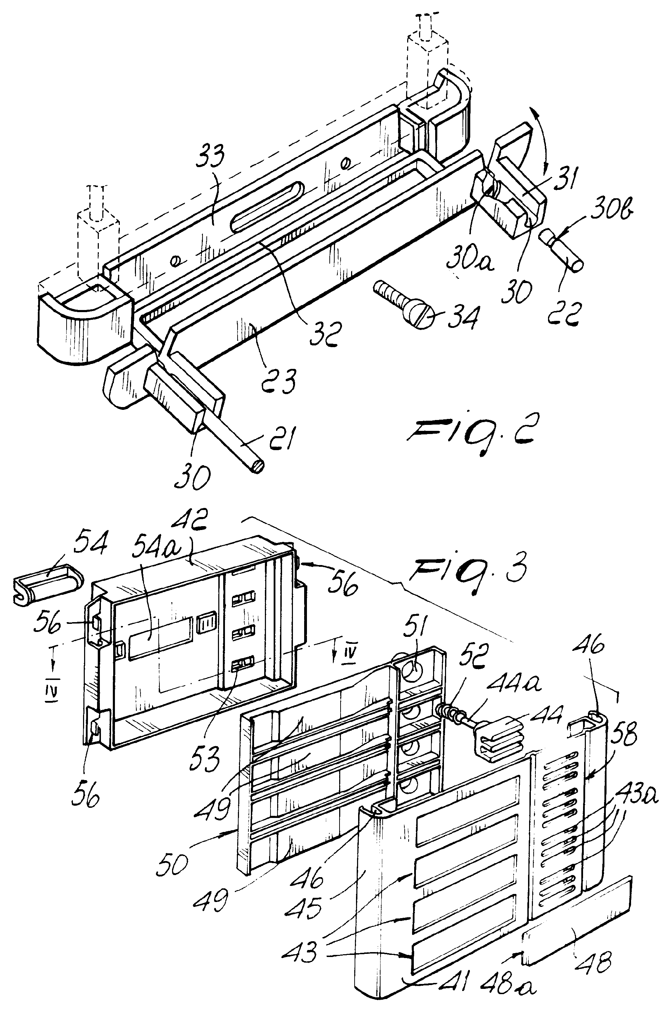

Referring now to Figures 1 and 2, the reference numeral 10 indicates the box of the button panel which, according to the installation requirements, may be mounted flush in a wall or simply fixed thereto, and the reference numeral 20 generally indicates a frame intended to frontally close the box 10 and constitute the actual button panel.

Said frame 20 substantially comprises two parallel steel rods 21-22 which are sectioned or sectionable, at preset notches, in preset lengths corresponding to the number of the modular elements which will compose the button panel.

The rods 21-22 are mutually connected by lower and upper removable crosspieces, respectively 23 and 24. Each crosspiece is advantageously made of polymeric material of appropriate rigidity, such as ABS (acrylonitrile-butadienestyrene), and is provided with two spaced blocks 25-26 and respectively 27-28, intended to receive and retain, with a snap-together engagement, the corresponding lower and upper ends of the rods 21-22. For this purpose, each block 25-28 defines a cylindrical seat 30 (figure 2) and a longitudinal slot 31 extending parallel to the generatrices of the seat 30 and adjacent thereto; said slot has a smaller width than the diameter of said seat which in turn substantially corresponds to the diameter of the rods 21, 22. In this manner the end of each rod - by virtue of the resilience of the material of the blocks 25-28 - can be forced through the slot 31 and snap engaged in the related seat 30.

As shown in Figure 2, to avoid that the rods 21, 22 slip off the seats 30, the latter are provided with inwardly protruding collars 30a adapted to co-operate with respective grooves 30b which are correspondingly formed in the ends of the rods. The lower crosspiece 23 is connected, by means of a hinge 32 with horizontal axis, to a base shoe 33 adapted to be rigidly associated with the box 10 by means of a screw 34 which engages in the threaded seat of a lower bracket 35 of the box. By virtue of the hinge 32, the frame 20 can be turned frontally forward and moved from a closure position, which is made stable by a second screw 36 which engages the threaded hole of an upper bracket 37 of the box, to an opening position preferably at least at 90° to the preceding one which allows access to a plurality of modular elements 40 which compose the button panel. Said elements 40 are fitted on the rods 21-22 so as to mutually superimpose, and each is composed of a front plate 41 intended to remain visible and by a rear housing 42 intended to accommodate the electromechanical componentry of each modular element.

The front plate 41 is obtained by sectioning an extruded element made of aluminum or aluminum alloy and has a plurality of windows 43 for address cards, obtained by punching or equivalent methods, and a plurality of passages 43a for the buttons 44, formed to the side of the windows. Furthermore the plate 41 backwardly defines seats for the passage of the rods 21 and 22 of the frame 20 and has two curved lateral connecting wings 45 which delimit seats 46 for the accommodation and retention of elastomer gaskets 47 which ensure a seal between the box and the frame 20.

As shown in Figure 3, the windows 43 are closed by respective transparent screens 48 provided with wings 48a which abut on the inner face of the plate 41. The respective address cards are visible through said screens and rest on corresponding raised portions 49 formed by an intermediate support 50 which also defines the holes 51 for accommodating the springs 52 of the buttons 44; said support 50 is made of transparent polymeric material and is inserted between the plate 41 and the housing 42.

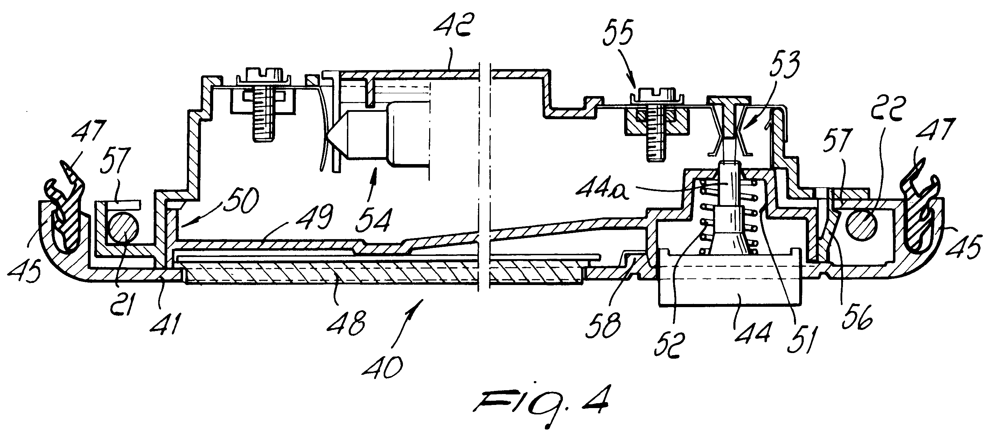

With reference to Figures 3 and 4, said housing supports a row of electric contacts 53, each of which is aligned with a corresponding button 44 and is closed by the button by means of a pusher finger 44a; said housing having a central window 54a intended to receive a lamp-holder shoe 54 and a series of connectors (not illustrated) or an equivalent terminal strip 55, which protrudes outside from the rear side of the housing and is electrically connected to the contacts 53.

As clearly illustrated in the figures, the housing 42 is removably associated with the plate 41 by means of four elastically resilient wings 56 which snap engage the undercut of a ridge 57 which delimits the seats of the rods 21-22.

A ridge 58 is also defined on the plate 41 to align the plate 41 with the rear containment housing.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A button panel with composable modular elements, particularly for house-phone and house-videophone systems, comprising a frame (20) intended to frontally close a box-like element (10) for flush-mounting or the like, characterized in that said frame comprises a pair of parallel metal rods (21,22) adapted to receive a plurality of modular elements (40), each of which comprises a front plate (41) and a rear housing (42) which accommodates electromechanical componentry, said modular elements (40) being fitted on said rods so as to mutually superimpose; said rods (21,22) being sectioned, or sectionable, in different lengths according to the number of modular elements which, when superimposed, compose the button panel, said rods being furthermore mutually connected by lower and upper removable crosspieces (23,24).

2. A button panel according to claim 1, characterized in that the lower and upper crosspieces (23,24) of the frame are made of polymeric material, each of said crosspieces bearing a pair of spaced blocks (25-28) intended to receive and retain, with snap-together engagement, corresponding lower and upper ends of the rods (21,22).

3. A button panel according to claim 2, characterized in that each block (25-28) of said crosspieces (23,24) defines a cylindrical seat (30) and an adjacent slot (31) which is parallel to the generatrices of the seat, said slot having a smaller width than the diameter of said seat.

4. A button panel according to claim 1, characterized in that the lower crosspiece (23) of the frame (20) is connected by a horizontal axis hinge (32) to a base shoe (33) which may be rigidly associated with said box (10), said hinge (32) allowing the frame to be tilted over from a closure position, stabilized by a locking screw (36), to a frontal opening position arranged preferably at least at 90° to the preceding one.

5. A button panel according to any of the preceding claims, characterized in that the front plate (41) of each modular element (40) comprises a plurality of screened windows (43,48) for address cards and a plurality of buttons (44) arranged near said windows, a pair of spaced cylindrical seats for the passage of the rods (21,22) of the frame (20) and a pair of curved lateral connecting wings (45) which delimit seats (46) for the retention and accommodation of elastomer gaskets (47) adapted to ensure a seal between the box-like element (10) and the frame (20).

6. A button panel according to claims 1 and 5, characterized in that said front plate (41) of each modular element (40) comprises an L-shaped ridge (47) which delimits the passage seats of the rods (21,22) and an undercut coupling for a plurality of elastically resilient wings (56) carried by the rear housing (42) of said modular element (40); said front plate and said rear housing being removably connected in a snap-together manner.

7. A button panel according to any of the preceding claims, characterized in that each modular element (40) comprises an intermediate support (50) made of transparent polymeric material interposed between said front plate (41) and said rear housing (42), said intermediate support (50) defining a plurality of raised portions (49) for supporting the address cards and a corresponding plurality of cylindrical seats (51) for the accommodation of return springs (52) of the buttons (44).

8. A button panel according to any of the preceding claims, characterized in that the back of each modular element (40) is provided with a plurality of electric contacts (53), each contact being aligned with a pusher finger (44a) of the corresponding button, with a series of connectors, or an equivalent terminal strip (55), electrically connected to said contacts (53) and protruding outwardly from the rear side of the housing (42), and with a window (54a) for accommodating and retaining a lamp-holder shoe (54).

## Patentansprüche

1. Bedienungspult mit in Modulbauweise zusammensetzbaren Elementen, insbesondere für Haussprech- und Hausvideosprechstellensysteme, umfassend einen Rahmen (20), der zum frontalen Schließen eines kastenähnlichen Elementes (10) zum Einbau oder dergleichen vorgesehen ist, dadurch gekennzeichnet, daß der Rahmen ein Paar parallele Metallstäbe (21, 22) aufweist, die zum Aufnehmen einer Vielzahl von Modulelementen (40) geeignet sind, deren jedes eine Frontplatte (41) und eine hinteres Gehäuse (42) aufweist, das elektromechanische Bauteile enthält, wobei die Modulelemente (40) auf den Stäben angebracht sind, so daß sie übereinander angeordnet sind; wobei die Stäbe (21, 22) in unterschiedliche Längen unterteilt sind oder unterteilbar sind gemäß der Anzahl von Modulelementen, die, wenn sie übereinander angeordnet sind, das Bedienungspult bilden, wobei die Stäbe ferner durch untere und obere entfernbare Querstücke (23, 24) miteinander verbunden sind.

2. Bedienungspult nach Anspruch 1, dadurch gekennzeichnet, daß das untere und obere Querstück (23, 24) des Rahmens aus Polymermaterial hergestellt sind, wobei jedes der Querstücke ein Paar in einem Abstand angeordnete Blöcke (25-28) trägt, die zum Aufnehmen und Halten entsprechender unterer und oberer Enden der Stäbe (21, 22) mit Schnappverbindung vorgesehen sind.

3. Bedienungspult nach Anspruch 2, dadurch gekennzeichnet, daß jeder Block (25-28) der Querstücke (23, 24) einen zylindrischen Sitz (30) und einen angrenzenden Schlitz (31) definiert, der parallel zu den Mantellinien des Sitzes ist, wobei der Schlitz eine geringere Breite aufweist als der Durchmesser des Sitzes.

4. Bedienungspult nach Anspruch 1, dadurch gekennzeichnet, daß das untere Querstück (23) des Rahmens (20) durch ein horizontales Achsgelenk (32) mit einer Ankerplatte (33) verbunden ist, die mit dem Kasten (10) starr verbunden sein kann, wobei das Gelenk (32) ermöglicht, daß der Rahmen von einer Schließposition, stabilisiert durch eine Verschlußschraube (36), in eine Frontöffnungsposition umgekippt werden kann, die bevorzugt mindestens 90° zu der vorhergehenden angeordnet ist.

5. Bedienungspult nach einem der vorhergehenden Ansprüche, dadurch gekennzeichnet, daß die Frontplatte (41) jedes Modulelementes (40) aufweist: eine Vielzahl von abgedeckten Fenstern (43, 48) für Namenskarten und eine Vielzahl von nahe den Fenstern angeordneten Knöpfen (44), ein Paar in einem Abstand angeordneten zylindrischen Sitzen für den Durchtritt der Stäbe (21, 22) des Rahmens (20) und ein Paar gebogene seitliche Verbindungsflügel (45), die Sitze (46) zum Halten und Aufnehmen von Elastomerdichtungen (47) abgrenzen, die geeignet sind, eine Dichtung zwischen dem kastenähnlichen Element (10) und dem Rahmen (20) sicherzustellen.

6. Bedienungspult nach den Ansprüchen 1 und 5, dadurch gekennzeichnet, daß die Frontplatte (41) jedes Modulelements (40) eine L-förmige Kante (47) aufweist, die die Durchtrittssitze der Stäbe (21, 22) abgrenzt und eine Unterschnittkupplung für eine Vielzahl von elastisch federnden Flügeln (56), die durch das hintere Gehäuse (42) des Modulelements (40) getragen sind, wobei die Frontplatte und das hintere Gehäuse in einem Schnappmechanismus lösbar verbunden sind.

7. Bedienungspult nach einem der vorhergehenden Ansprüche, dadurch gekennzeichnet, daß jedes Modulelement (40) einen Zwischenträger (50) aus transparentem Polymermaterial zwischen der Frontplatte (41) und dem hinteren Gehäuse (42) eingesetzt aufweist, wobei der Zwischenträger (50) eine Vielzahl von erhabenen Bereichen (49) zum Stützen der Namenskarten und eine entsprechende Vielzahl von zylindrischen Sitzen (51) für die Aufnahme von Rückstellfedern (52) für die Knöpfe (44) definiert.

8. Bedienungspult nach einem der vorhergehenden Ansprüche, dadurch gekennzeichnet, daß der Rücken jedes Modulelements (40) versehen ist mit einer Vielzahl von elektrischen Kontakten (53), wobei jeder Kontakt mit einem Drückerfinger (44a) des entsprechenden Knopfes fluchtet, mit einer Reihe von Verbindungsstücken oder einem äquivalenten Anschlußstreifen (55), die elektrisch mit den Kontakten (53) verbunden sind und von der Rückseite des Gehäuses (42) nach außen vorstehen, und mit einem Fenster (54a) zum Aufnehmen und Halten einer Lampenfassung (54).

## Revendications

1. Tableau de commande avec des éléments modulaires composables, en particulier pour des systèmes d'interphone et de vidéophone domestiques, comprenant un cadre (20) prévu pour fermer frontalement un élément (10) en forme de boîte selon un montage de niveau ou analogue, caractérisé en ce que ledit cadre comprend une paire de barres métalliques parallèles (21, 22) adaptées pour recevoir une pluralité d'éléments modulaires (40), chacun d'eux comprenant une plaque frontale (41) et un logement arrière (42) qui reçoit des composants électromécaniques, lesdits éléments modulaires (40) étant montés sur lesdites barres de façon à se superposer mutuellement; lesdites barres (21, 22) étant sectionnées ou sectionnables en différentes longueurs selon le nombre d'éléments modulaires qui, quand ils sont superposés, composent la tableau de commande, lesdites barres étant ensuite mutuellement connectées par des entretoises inférieure et supérieure démontables (23, 24).

2. Tableau de commande selon la revendication 1, caractérisé en ce que les entretoises inférieure et supérieure (23, 24) du cadre sont faites d'un matériau polymère, chacune desdites entretoises portant une paire de blocs espacés (25-28) prévus pour recevoir et retenir, avec un engagement par encliquetage, les extrémités correspondantes inférieures et supérieures des barres (21, 22).

3. Tableau de commande selon la revendication 2, caractérisé en ce que chaque bloc (25-28) desdites entretoises (23, 24) définit un siège cylindrique (30) et une encoche adjacente (31) qui est parallèle aux génératrices du siège, ladite encoche ayant une largeur plus petite que le diamètre dudit siège.

4. Tableau de commande selon la revendication 1, caractérisé en ce que l'entretoise inférieure (23) du cadre (20) est connectée par une charnière (32) à axe horizontal à un patin de base (33) qui peut être associé rigidement avec ladite boîte (10), ladite charnière (32) permettant au cadre de s'incliner à partir d'une position de fermeture, stabilisé par une vis de verrouillage (36) jusqu'à une position d'ouverture frontale disposée de préférence au moins à 90 degrés de la précédente position.

5. Tableau de commande selon l'une quelconque des revendications précédentes, caractérisé en ce que la plaque frontale (41) de chaque élément modulaire (40) comprend une pluralité de fenêtres protégées (43, 48) pour des cartes d'adresses et une pluralité de boutons (44) disposés près desdites fenêtres, une paire de sièges cylindriques espacés pour le passage des barres (21, 22) du cadre (20), et une paire d'ailettes de connexion latérales incurvées (45) qui délimitent des sièges (46) pour la rétention et le logement de joints (47) en élastomère adaptés pour assurer une étanchéité entre l'élément (10) en forme de boîte et le cadre (20).

6. Tableau de commande selon les revendications 1 et 5, caractérisé en ce que ladite plaque frontale (41) de chaque élément modulaire (40) comprend une arête (47) en forme de L qui délimite les sièges de passage des barres (21, 22), et un raccord évidé pour une pluralité d'ailettes (56) élastiquement résilientes supportées par le logement arrière (42) dudit élément modulaire (40); ladite plaque frontale et ledit logement arrière étant connectés de façon démontable par encliquetage.

7. Tableau de commande selon l'une quelconque des revendications précédentes, caractérisé en ce que chaque élément modulaire (40) comprend un support intermédiaire (50) fait d'un matériau polymère transparent interposé entre ladite plaque frontale (41) et ledit logement arrière (42), ledit support intermédiaire (50) définissant une pluralité de parties saillantes (49) pour supporter les cartes d'adresses, et une pluralité correspondante de sièges cylindriques (51) pour le logement des ressorts de rappel (52) des boutons (44).

8. Tableau de commande selon l'une quelconque des revendications précédentes, caractérisé en ce que l'arrière de chaque élément modulaire (40) est pourvu d'une pluralité de contacts électriques (53), chaque contact étant aligné avec un doigt pousseur (44a) du bouton correspondant, avec une série de connecteurs ou avec une bande terminale équivalente (55) connectée électriquement auxdits contacts (53) et faisant saille vers l'extérieur depuis le côté arrière du logement (42), et avec une fenêtre (54a) pour loger et retenir un socle (54) de support de lampe.
